# EUROPÄISCHE PATENTSCHRIFT

(11) **EP 2 879 807 B1**
(45) Veröffentlichungstag und Bekanntmachung des Hinweises auf die Patenterteilung: **14.09.2016**
(21) Anmeldenummer: 13737592.9
(22) Anmeldetag: 15.07.2013
(51) Int. Cl.: B05B 15/12, B05B 15/04

(54) **BESCHICHTUNGSKABINE ZUM BESCHICHTEN VON WERKSTÜCKEN**
COATING BOOTH FOR COATING WORKPIECES
CABINE DE REVÊTEMENT POUR LE REVÊTEMENT DE PIÈCES

(30) Priorität: 31.07.2012 DE 102012213500
(43) Veröffentlichungstag der Anmeldung: 10.06.2015
(73) Patentinhaber: Gema Switzerland GmbH, 9015 St. Gallen (CH)
(72) Erfinder: GELAIN, Silvano, CH-9030 Abtwil (CH)
(74) Vertreter: Trinks, Ole
(86) Internationale Anmeldenummer: PCT/EP2013/064894
(87) Internationale Veröffentlichungsnummer: WO 2014/019839

(56) Entgegenhaltungen:
- EP-A1- 2 058 055
- EP-A1- 2 275 209
- EP-A1- 2 368 643

## Beschreibung

Die vorliegende Erfindung betrifft eine Beschichtungskabine zum Beschichten von Werkstücken. Insbesondere betrifft die Erfindung eine Beschichtungskabine zum Pulverbeschichten von Werkstücken.

Aus der EP 2 368 643 A1 ist eine Beschichtungskabine mit den Merkmalen des Oberbegriffs von Anspruch 1 bekannt. Sie ist auch mit einem vertikal verlaufenden Absaugkanal versehen, welcher jedoch außerhalb der Beschichtungskammer im Eingangsbereich der Kabine angeordnet ist. Vertikale Absaäugkanäle, welche sich in Seitenwänden von Beschichtungskabinen befinden, sind aus der EP 2 058 055 A1 und der EP 2 275 209 A1 bekannt.

Herkömmliche, aus dem Stand der Technik bekannte Beschichtungskabinen weisen im horizontalen Querschnitt in der Regel eine im Wesentlichen rechteckige Form auf. Bei diesem länglichen Beschichtungskabinen sind an den schmalen Stirnseiten Öffnungen oder Türen, sogenannte Werkstückdurchgänge vorgegeben, die für den Transport von Werkstücken durch die Kabine mittels einer Transportvorrichtung, üblicherweise einer Hängefördervorrichtung, dienen. Ferner sind in den Seitenwänden der bekannten Beschichtungskabinen in der Regel Öffnungen oder Vertikalschlitze zum Einführen von Handsprühpistolen oder Automatiksprühpistolen in die Kabine vorgesehen, mit welchen die durch die Beschichtungskabine transportierten Werkstücke beschichtet werden können.

Bei den bekannten Kabinen fällt das versprühte, nicht am Objekt haftende überschüssige Pulver zum größten Teil auf den Kabinenboden herab. Dieses nicht am Objekt haftende überschüssige Pulver kann vom Kabinenboden abgesaugt und mittels Pulverabscheidung, insbesondere Zyklon und/oder Filterelementen, aus dem Absaugluftstrom getrennt werden, bevor es den Sprühvorrichtungen erneut zugeführt wird. Zum Absaugen des überschüssigen Pulvers ist üblicherweise vorgesehen, horizontal ausgerichtete Absaugsschlitze im Kabinenboden vorzusehen.

Bei einem Pulverwechsel, beispielsweise Farbwechsel müssen nicht nur sämtliche Kabineninnenflächen, sondern auch die zur Pulverrückgewinnung eingesetzten Zyklone und Filtereinrichtung sowie die Pulverleitung äußerst genau gereinigt werden, damit keine Pulverpartikel des zuerst verwendeten Pulvers mit dem danach verwendeten Pulver vermischt werden. Bereits einzelne Pulverpartikel können zu Beschichtungsfehlern auf dem Objekt führen, welche die Beschichtung unbrauchbar machen.

Eine Rückgewinnung des Überschusspulvers reduziert zwar die Betriebskosten der Beschichtungskabine, geblieben ist jedoch weiterhin das Problem, dass bei einem Farbwechsel sehr viel Zeit zum Reinigen der Komponenten benötigt wird, wodurch lange Stillstandzeiten der Anlage entstehen. Hieraus ist ersichtlich, dass bei Vielfarbenbeschichtungen und dann, wenn Objekte mit verschiedenen Farben beschichtet werden sollen, der genannte Sprühbeschichtungsbetrieb mit Rückgewinnung des Überschusspulvers unrentabel wird und auf Verlust gefahren werden muss. "Auf Verlust fahren" bedeutet, dass das Überschusspulver nicht aufbereitet und wiederverwendet, sondern als Abfall weggeworfen wird, da das Reinigen umso schwerer und zeitaufwändiger ist, je mehr das Pulver sich in der Kabine und den anderen Teilen ablagern kann.

Ausgehend von dieser Problemstellung liegt der Erfindung die Aufgabe zugrunde, eine Beschichtungskabine zum Beschichten, insbesondere Pulverbeschichten von Werkstücken dahingehend weiterzubilden, dass der für einen Farbwechsel oder Pulverwechsel erforderliche Zeitaufwand reduziert werden kann, ohne auf eine gute Beschichtungsqualität verzichten zu müssen. Durch die Erfindung soll insbesondere erreicht werden, dass ein Ablagern von Pulverresten in der Kabine und an den anderen Teilen wirkungsvoll verhindert wird.

Erfindungsgemäß wird diese Aufgabe durch den Gegenstand des unabhängigen Patentanspruches 1 gelöst.

Demnach betrifft die Erfindung eine Beschichtungskabine zum Beschichten, insbesondere Pulverbeschichten von Werkstücken, wobei die Beschichtungskabine einen Kabinenboden sowie zwei gegenüberliegenden Seitenwände aufweist. An den zwei einander gegenüberliegenden Endbereichen der Beschichtungskammer sind Werkstückdurchgänge angeordnet, durch welche die zu beschichtenden Werkstücke in die Beschichtungskammer hinein bzw. aus der Beschichtungskammer heraus gefördert werden können. Zu diesem Zweck weist die erfindungsgemäße Beschichtungskabine eine Fördervorrichtung auf, welche sich entlang der Beschichtungskammer erstreckt. Die Fördervorrichtung kann dabei entweder als Hängeförderer oder als Flurförderer ausgebildet sein. Ferner ist mindestens ein am Kabinenboden angeordneter, horizontal ausgerichteter Absaugschlitz zum Absaugen von überschüssigem Beschichtungspulver vorgesehen. Zusätzlich weist die Beschichtungskabine mindestens einen vertikal verlaufenden Absaugkanal mit einem vertikal ausgerichteten Absaugschlitz zum Absaugen von überschüssigem Beschichtungspulver auf. Der mindestens eine vertikal verlaufenden Absaugkanal ist in einem Eckbereich der Beschichtungskabine angeordnet. Der Eckbereich grenzt insbesondere an eine der beiden gegenüberliegenden Seitenwänden und gleichzeitig an einen der beiden Werkstückdurchgänge an. Durch die Anordnung des vertikal verlaufenden Absaugkanals in einem Eckbereich der Beschichtungskammer kann ein Absaugluftstrom generiert werden, welcher in allen Teilbereichen der Beschichtungskammer gleich stark ist, wie dies im Bezug auf die in den Zeichnungen dargestellten Ausführungsformen näher erläutert wird. Darüber hinaus verhindert der in einem Eckbereich der Beschichtungskammer ausgebildete mindestens eine vertikal verlaufende Absaugkanal effektiv ein Austreten von Überschusspulver aus der Beschichtungskammer.

Unter dem Begriff "horizontal ausgerichteter Absaugschlitz" ist hierbei allgemein ein Absaugschlitz zu verstehen, welcher sich horizontal, d. h. in der Ebene des Kabinenbodens erstreckt. Dabei spielt es keine Rolle, ob der horizontal ausgerichtete Absaugschlitz parallel, senkrecht oder gar schräg zur Längsrichtung des Kabinenbodens ausgebildet ist. Vielmehr ist hierin unter dem Begriff "vertikal" eine Ausrichtung zu verstehen, welche senkrecht auf der horizontalen Eben, d. h. der Ebene des Kabinenbodens, steht. Mit anderen Worten, der vertikal verlaufende Absaugkanal erstreckt sich senkrecht vom Kabinenboden in Richtung eines Deckenbereichs der Beschichtungskammer.

Die erfindungsgemäße Beschichtungskabine zum Beschichten von Werkstücken weist eine Vielzahl von Vorteilen auf: durch den vertikal verlaufenden Absaugkanal kann überschüssiges Beschichtungspulver bereits vor dem Auftreffen auf den Kabinenboden abgesaugt werden. Darüber hinaus verhindert der Absaugkanal effektiv ein Ablagern von Pulverresten auf Seitenwänden der Beschichtungskammer.

Insbesondere aber kann durch den vertikal verlaufenden Absaugkanal mit den vertikal ausgerichteten Absaugsschlitzen ein besonders homogener Absaugluftstrom innerhalb der Kabine erzeugt werden, so dass überschüssiges Beschichtungspulver zuverlässig aus dem Kabineninneren entfernt werden kann. Auch dient der Absaugluftstrom des mindestens einen vertikal verlaufenden Absaugkanals dazu, ein Herausdringen von überschüssigem Beschichtungspulver aus der Beschichtungskammer zu verhindern. Stattdessen wird mit dem Absaugluftstrom sogar außerhalb der Beschichtungskabine versprühtes Pulver (manueller Beschichtungsplatz) zumindest teilweise abgesaugt.

Vorteilhafte Weiterbildungen der erfindungsgemäßen Beschichtungskabine sind in den Unteransprüchen angegeben.

Es ist ferner bevorzugt, den vertikal ausgerichteten Absaugschlitz auf einer den nächstliegenden Werkstücksdurchgang abgewandten Seite des mindestens einen vertikal verlaufenden Absaugkanals anzuordnen. Mit anderen Worten, der vertikal ausgerichtete Absaugschlitz ist gemäß dieser Ausführungsform jeweils in Richtung des Zentrums der Beschichtungskammer ausgerichtet. Dementsprechend wird durch den mindestens einen vertikal verlaufenden Absaugkanal gewährleistet, dass das Risiko des Ablagerns von Pulverresten auf Seitenwänden der Beschichtungskammer auf ein Minimum reduziert wird. Darüber hinaus ergibt sich durch die besondere Anordnung des Absaugschlitzes ein vorteilhaftes, breites Geschwindigkeitsprofil des Absaugluftstromes, wodurch dieser einen maximalen Einzugsbereich aufweist.

Nach einer weiteren Umsetzung kann die erfindungsgemäße Beschichtungskabine ferner mindestens einen Handbeschichtungsbereich aufweisen, welcher vor und/oder hinter der Beschichtungskabine neben dem jeweiligen Werkstückdurchgang angeordnet ist. Durch die Ausstattung der erfindungsgemäßen Beschichtungskabine mit mindestens einem (vorzugsweise zwei) Handbeschichtungsbereich, kann der mindestens eine vertikal verlaufende Absaugkanal dazu verwendet werden, auch die Pulverreste des Handbeschichtungsbereichs abzusaugen. Demzufolge bedarf es bei der erfindungsgemäßen Beschichtungskabine keiner weiteren Absaugvorrichtungen, welche speziell für den Handbeschichtungsbereich vorgesehen sind. Vielmehr kann der ohnehin erzeugte Absaugluftstrom der vertikal verlaufenden Absaugkanäle dazu verwendet werden, den gesamten Handbeschichtungsbereich mit abzudecken.

Der vertikal ausgerichtete Absaugschlitz erstreckt sich vorzugsweise vom Kabinenboden bis zu einem Deckenbereich der Beschichtungskammer. Zwar ist es grundlegend auch denkbar, den vertikal ausgerichteten Absaugschlitz als eine Vielzahl kleinerer Schlitze oder gar als in einer Linie angeordnete Rundlöcher auszubilden, jedoch wird durch die durchgehende Ausgestaltung des vertikal ausgerichteten Absaugschlitzes ein besonders homogener Absaugluftstrom im gesamten Bereich der Beschichtungskabine generiert.

Darüber hinaus ist in einer weiteren Umsetzung des vertikal ausgerichteten Absaugschlitzes vorgesehen, dass dieser mehrere Teilbereiche mit unterschiedlich großem Öffnungsquerschnitt aufweist. So kann der vertikal ausgerichtete Absaugschlitz beispielsweise einen ersten Teilbereich aufweisen, welcher am Kabinenboden angeordnet ist und einen kleineren Öffnungsquerschnitt, hat als ein zweiter Teilbereich, welcher an einem Deckenbereich der Beschichtungskammer angeordnet ist. Mit anderen Worten, der Öffnungsquerschnitt des vertikal ausgerichteten Absaugschlitzes kann sich linear mit dem zunehmenden Abstand zum Kabinenboden derart vergrößeren, dass an dem Deckenbereich nahe dem zweiten Teilbereich ein größerer Öffnungsquerschnitt entsteht, als es im ersten dem Kabinenboden nahen Teilbereich der Fall ist.

Durch die Ausbildung eines vertikal ausgerichteten Absaugschlitzes, welcher am Deckenbereich einen größeren Öffnungsquerschnitt aufweist als am Kabinenboden, entsteht in vorteilhafter Weise ein besonders homogener Luftstrom. Dies liegt darin begründet, dass der Absaugkanal über eine Durchtrittsöffnung am Kabinenboden mit der Absaugvorrichtung verbunden ist. Somit herrscht im ersten Teilbereich am Kabinenboden ein höherer Saugluftstrom, als es im zweiten Teilbereich an der Decke der Beschichtungskammer der Fall ist. Durch die unterschiedlichen Öffnungsquerschnitte kann dies jedoch kompensiert werden.

Alternativ ist es selbstverständlich auch möglich, dass der erste Teilbereich des Absaugschlitzes einen größeren Öffnungsquerschnitt aufweist als der erste Teilbereich. Auch ist es denkbar, dass der vertikal ausgerichtete Absaugschlitz einen konstanten Öffnungsquerschnitt oder aber willkürlich wechselnde Öffnungsquerschnitte aufweist.

Ferner kann der vertikal ausgerichtete Absaugschlitz einen im Wesentlichen düsenförmigen Querschnitt aufweisen. Hierdurch werden auf einfache Weise besonders hohe Strömungsgeschwindigkeiten des Absaugluftstromes erreicht, was zu einer effektiven Absaugung von überschüssigen Pulverresten führt.

Es sei hierbei noch erwähnt, dass der vertikal ausgerichtete Absaugschlitz des mindestens einen vertikal verlaufenden Absaugkanals in vorteilhafter Weise an einer der Seitenwände der Beschichtungskammer angeordnet ist. Somit kann der vertikal verlaufende Absaugkanal eine besonders einfache Struktur aufweisen, um zusammen mit einer der Seitenwände den vertikal ausgerichteten Absaugschlitz auszubilden. Hierdurch wird der Konstruktionsaufwand für den mindestens einen vertikal verlaufenden Absaugkanal der erfindungsgemäßen Beschichtungskabine stark reduziert. Auch wird durch die Anordnung des vertikal ausgerichteten Absaugschlitzes an der Seitenwand der Beschichtungskammer gewährleitstet, dass ein Absetzen von Pulverresten an den Seitenwänden auf ein Minimum reduziert wird.

Nach einer weiteren Ausführungsform kann der mindestens eine vertikal verlaufende Absaugkanal einen im Wesentlichen rechteckigen Querschnitt aufweisen. Dabei ist eine erste Seitenwand des vertikal verlaufenden Absaugkanals vorzugsweise derart über ein Scharnier mit einer zweiten Seitenwand des Absaugkanals verbunden, dass eine Serviceklappe entsteht. Durch diese besonders vorteilhafte Konstruktion ist es auf einfache Weise möglich, den mindestens einen vertikal verlaufenden Absaugkanal, beispielsweise zum Farbwechsel, zu reinigen. Dafür ist es dementsprechend lediglich erforderlich, die Serviceklappe zu öffnen und den Innenraum des vertikal verlaufenden Absaugkanals mit Druckluft bzw. Spülflüssigkeit zu reinigen.

Es ist weiterhin vorgesehen, dass die Beschichtungskabine einen unterhalb des Kabinenbodens angeordneten Absaugbereich aufweist, welcher mit mindestens einer Absaugvorrichtung verbunden ist. Die Absaugvorrichtung ist ausgebildet, das von den vertikal und den horizontal ausgerichteten Absaugschlitze abgesaugte, überschüssige Beschichtungspulver abzuführen. Mit anderen Worten kann somit über den gemeinsamen Absaugbereich das über die vertikalen und horizontalen Absaugschlitze abgesaugte Überschusspulver gleichzeitig ausgetragen werden. Es bedarf somit vorzugsweise nur einer Absaugvorrichtung zum Erzeugen der entsprechenden Absaugluftströme.

Die Beschichtungskabine weist bevorzugt vier vertikal verlaufende Absaugkanäle, mit je einem vertikal ausgerichteten Absaugschlitz zum Absaugen von überschüssigem Beschichtungspulver auf. Selbstverständlich kann somit eine besonders effektive Absaugung von Pulverresten auch bei besonders groß dimensionierten Beschichtungskammern gewährleistet werden. Insbesondere für den Fall, dass die vier vertikal verlaufenden Absaugkanäle jeweils in den Eckbereichen der Beschichtungskammer angeordnet sind, ist darüber hinaus eine besonders effektive Absaugung des Außenbereichs der Beschichtungskabine möglich.

In diesem Zusammenhang sei auch erwähnt, dass es besonders bevorzugt ist, die Beschichtungskabine mit zwei Absaugvorrichtungen zu verbinden, welche jeweils mit zwei der vier vertikal verlaufenden Absaugkanäle verbunden oder verbindbar sind. Gemäß dieser Ausführungsform kann auch bei großen Beschichtungskabinen gewährleistet werden, dass die vertikal verlaufenden Absaugkanäle einen ausreichenden Saugluftstrom aufweisen.

Es ist ferner von Vorteil, die Beschichtungskabine mindestens mit drei horizontal verlaufenden Absaugschlitzen auszubilden, welche sich in Transportrichtung der Werkstücke entlang des Kabinenbodens zwischen den Werkstückdurchgängen erstrecken. Die mindestens drei horizontal verlaufenden Absaugschlitze sind dabei in der Mitte der Beschichtungskammer derart unterteilt, so dass je ein vorderer Teilbereich, der mit einer ersten der beiden Absaugvorrichtungen verbunden oder verbindbar ist, sowie je ein hinterer Teilbereich, welcher mit einer zweiten der beiden Absaugvorrichtungen verbunden oder verbindbar ist, entsteht. Die Unterteilung der horizontal verlaufenden Absaugschlitze in vordere und hintere Teilbereiche hat den Vorteil, dass über die gesamte Länge der horizontal verlaufenden Absaugschlitze ein gleichmäßiger Saugluftstrom entsteht. Dabei kann es sich bei den horizontal verlaufenden Absaugschlitzen beispielsweise um zwei oder mehrere getrennte Schlitze handeln, oder um einen durchgehenden Schlitz, welcher durch eine Trennplatte in der Mitte der Beschichtungskammer unterteilt ist. Eine solche Trennung in einen vorderen oder hinteren Teilbereich ist insbesondere dann von Nöten, wenn die Beschichtungskabine sehr lang, d. h. insbesondere über 4 m, ausgebildet ist.

Es sei an dieser Stelle angemerkt, dass der mindestens eine vertikal verlaufende Absaugkanal vorzugsweise dazu ausgebildet ist, einen Saugluftstrom von 3000 bis 7000 m³/h durch die entsprechenden vertikal ausgerichteten Absaugstützen zu erzeugen. Dagegen sind die mindestens drei horizontal auf dem Kabinenboden verlaufenden Absaugschlitze vorzugsweise jeweils dazu ausgebildet, einen Saugluftstrom von 5000 bis 7500 m³/h zu erzeugen.

Gemäß eines weiteren Aspekts der erfindungsgemäßen Beschichtungskabine kann diese mindestens eine Luftblasvorrichtung aufweisen, welche entlang des Kabinenbodens angeordnet und ausgebildet ist, überschüssiges Pulver in Richtung des mindestens einen horizontal verlaufenden Absaugschlitzes zu blasen. Die mindestens eine Luftblasvorrichtung ist dabei vorzugsweise zwischen den vertikal verlaufenden Absaugschlitzen angeordnet, um Pulver, welches sich zwischen den Schlitzen ablagert, in Richtung der Absaugschlitze auszublasen. Die mindestens eine Luftblasvorrichtung ist dazu mit einer Druckluftquelle verbunden und kann über ein Ventil derart gesteuert werden, dass ein kontinuierlicher oder pulsierender Luftstrom zum Abblasen von Pulverresten entsteht.

Im Folgenden wird die erfindungsgemäße Beschichtungskabine mit Bezug auf die in den Figuren dargestellten Ausführungsformen näher erläutert:
Dabei zeigen:
   - Fig. 1:: eine schematische Schnittansicht von oben auf eine Ausführungsform der erfindungsgemäßen Beschichtungskabine;
   - Fig. 2:: eine schematische Querschnittsansicht entlang der Schnittachse II-II durch die Ausführungsform der Beschichtungskabine gemäß Fig. 1;
   - Fig. 3:: eine schematische Schnittansicht von oben auf einen vertikal verlaufenden Absaukanal;
   - Fig. 4:: eine schematische Schnittansicht von der Seite der in Fig. 1 dargestellten Ausführungsform; und
   - Fig. 5:: eine vereinfachte Darstellung der aus Fig. 1 bekannten schematischen Schnittansicht von oben.

In der vorliegenden detaillierten Figurenbeschreibung sind gleiche oder gleich wirkende Bauteile aus Gründen der Übersichtlichkeit mit gleichen Bezugszeichen versehen.

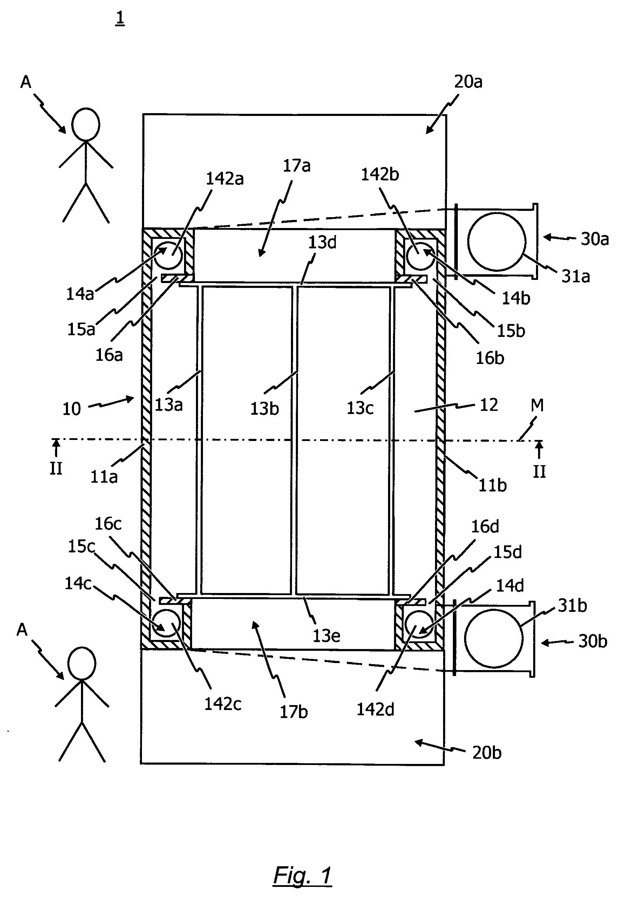

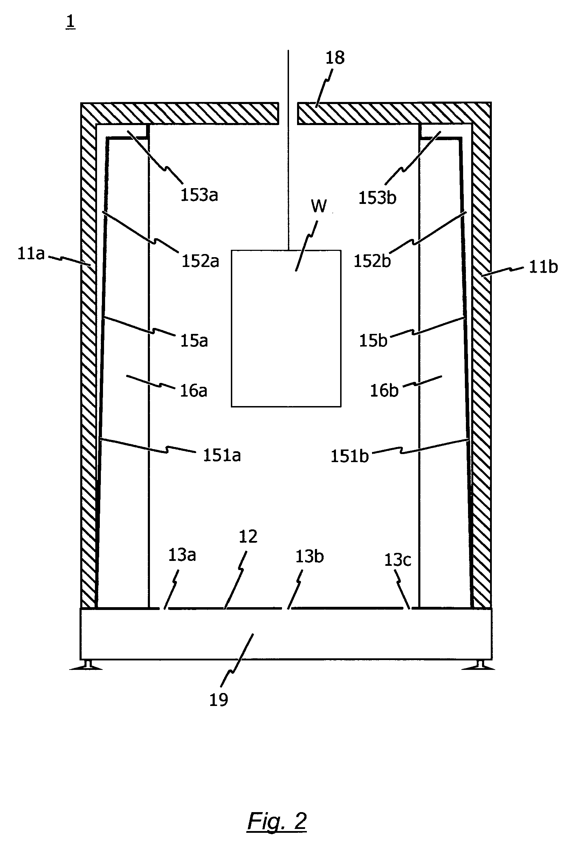

Eine beispielhafte Ausführungsform der erfindungsgemäßen Beschichtungskabine 1 ist der Fig. 1 zu entnehmen. Wie zu erkennen, weist die dargestellte Beschichtungskabine 1 zum Beschichten von Werkstücken W (vgl. Fig. 2) eine Beschichtungskammer 10 mit einem Kabinenboden 12 sowie zwei gegenüberliegenden Seitenwänden 11a, 11b auf. An zwei einander gegenüberliegenden Endbereichen der Beschichtungskammer 10 sind sogenannte Werkstückdurchgänge 17a, 17b angeordnet. Die Werkstückdurchgänge 17a, 17b können entweder, wie dargestellt, als einfache Öffnungen an den Endbereichen der Beschichtungskammer 10 ausgebildet sein oder zusätzlich Türen zum bedarfsweisen Verschließen der Beschichtungskammer 10 aufweisen. Auch weist die erfindungsgemäße Beschichtungskabine 1 eine in Fig. 2 dargestellte Fördervorrichtung zum Transport der zu beschichtenden Werkstücke W durch die Beschichtungskammer 10 auf.

Am Kabinenboden der Beschichtungskammer 10 ist mindestens ein horizontal ausgerichteter Absaugschlitz 13a, 13b, 13c, 13d, 13e vorgesehen, welcher zum Absaugen von überschüssigem Beschichtungspulver dient. Einfach ausgedrückt kann es sich bei dem mindestens einen horizontal ausgerichteten Absaugschlitz 13a, 13b, 13c, 13d, 13e allgemein um einen Absaugschlitz handeln, welcher sich horizontal, d. h. in der Ebene des Kabinenbodens, erstreckt. Wie es der Abbildung entnommen werden kann, sind vorzugsweise drei in Längsrichtung der Beschichtungskammer 10 ausgebildete Absaugschlitze 13a, 13b, 13c sowie zwei senkrecht zur Längsrichtung der Beschichtungskammer 10 ausgebildete Absaugschlitze 13d, 13e vorgesehen. Selbstverständlich ist es auch denkbar, die Beschichtungskammer 10 mit mehr oder weniger horizontal ausgerichteten Absaugschlitzen zu versehen, welche eine beliebige Ausrichtung entlang des Kabinenbodens 12 aufweisen.

Um das Absaugen von überschüssigem Beschichtungspulver noch effizienter zu gestalten, weist die erfindungsgemäße Beschichtungskabine mindestens einen, insbesondere vier vertikal verlaufende Absaugkanäle 14a, 14b, 14c, 14d mit je einem vertikal ausgerichteten Absaugschlitz 15a, 15b, 15c, 15d auf. Wie gezeigt, ist der mindestens eine vertikal verlaufende Absaugkanal 14a, 14b, 14c, 14d in einem Eckbereich der Beschichtungskammer 10 angeordnet, welcher an eine der beiden gegenüberliegenden Seitenwände 11a, 11b sowie an einen der beiden Werkstückdurchgänge 17a, 17b angrenzt. Im Einzelnen sind bei der in der Fig. 1 dargestellten Ausführungsform jeweils zwei vertikal verlaufende Absaugkanäle 14a, 14c an einer ersten Seitenwand 11a der Beschichtungskammer 10 sowie jeweils zwei vertikal verlaufende Absaugkanäle 15b, 15d an einer zweiten Seitenwand 11b der Beschichtungskammer angeordnet.

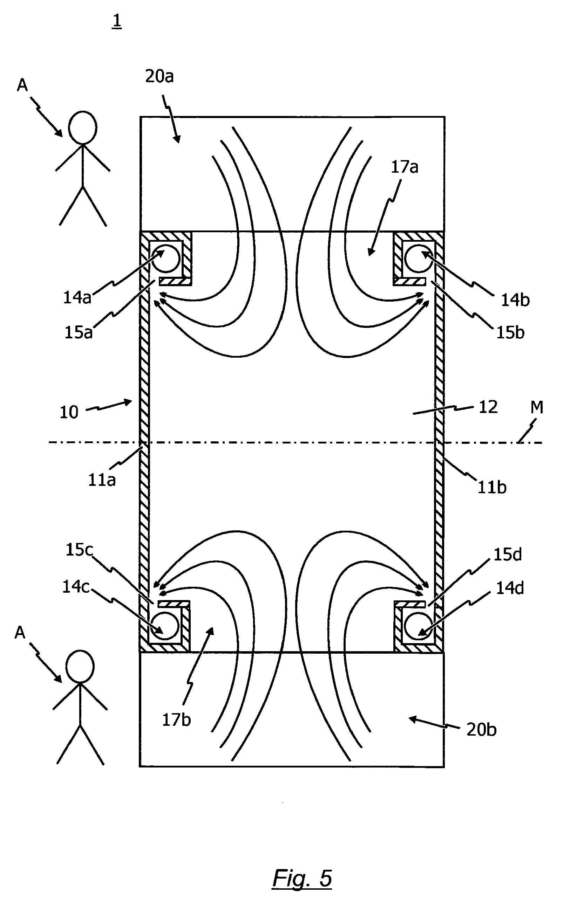

Der vertikal ausgerichtete Absaugschlitz 15a, 15b, 15c, 15d ist vorzugsweise auf einem der nächstliegenden Werkstückdurchgang abgewandten Seite 16a, 16b, 16c, 16d des mindestens einen vertikal verlaufenden Absaugkanals 14a, 14b, 14c, 14d angeordnet. Mit anderen Worten sind die vertikal ausgerichteten Absaugschlitze 15a, 15b, 15c, 15d auf einer Seite der vertikal verlaufenden Absaugkanäle 14a, 14b, 14c, 14d angeordnet, welche in Richtung des Innenraums der Beschichtungskammer 10 ausgerichtet ist. Somit lässt sich ein besonders vorteilhafter Absaugluftstrom erzeugen, wie dies später mit Bezug auf die Fig. 5 näher erläutert wird.

Wie es ferner anhand der Fig. 1 erkennbar ist, weist die dargestellte Beschichtungskabine 1 mindestens einen, insbesondere zwei Handbeschichtungsbereiche 20a, 20b auf. Dabei ist ein Handbeschichtungsbereich 20a hinter der Beschichtungskammer 10 sowie ein Handbeschichtungsbereich 20b vor der Beschichtungskammer 10 neben dem jeweiligen Werkstückdurchgang 17a, 17b angeordnet. Die Handbeschichtungsbereiche 20a, 20b sind - wie aus dem Stand der Technik bekannt - derart ausgebildet, so dass ein Arbeiter A das Werkstück W bedarfsweise mit Hilfe einer manuellen Sprühbeschichtungspistole beschichten kann. Wie es später näher erläutert wird, kann der Absaugluftstrom der erfindungsgemäßen Beschichtungskabine 1 insbesondere auch dazu verwendet werden, überschüssiges Pulver, welches an den Handbeschichtungsbereichen 20a, 20b anfällt, abzusaugen.

In Fig. 2 ist eine schematische Schnittansicht durch die in Fig. 1 dargestellte Mittenachse M dargestellt. Hieraus ist zu erkennen, dass sich der vertikal ausgerichtete Absaugschlitz 15a, 15b, 15c, 15d vom Kabinenboden 12 bis zu einem Deckenbereich 18 der Beschichtungskammer 10 erstrecken kann. Im Einzelnen sind in Fig. 2 die beiden vertikal ausgerichteten Absaugschlitze 15a, 15b der Absaugkanäle 14a, 14b dargestellt. Diese weisen in der dargestellten Ausführungsform einen durchgehenden vertikalen Absaugschlitz auf. Selbstverständlich muss der vertikale Absaugschlitz 15a, 15b nicht durchgehend ausgebildet sein, sondern kann alternativ auch aus einer Vielzahl einzelner Schlitze oder Rundöffnungen bestehen.

Bei näherem Betrachten der Fig. 2 wird darüber hinaus klar, dass der vertikal ausgerichtete Absaugschlitz 15a, 15b mehrere Teilbereiche 151a, 151b, 152a, 152b, 153a, 153b mit unterschiedlich großem Öffnungsquerschnitt aufweist. Dabei ist in Fig. 2 insbesondere eine Ausführungsform dargestellt, bei der die vertikal ausgerichteten Absaugschlitze 15a, 15b jeweils einen ersten Teilbereich 151a, 151b aufweisen, welcher am Kabinenboden 12 angeordnet ist und einen kleineren Öffnungsquerschnitt aufweist, als zweite Teilbereiche 152a, 152b, welche an einem Deckenbereich 18 der Beschichtungskammer 10 angeordnet sind. Mit anderen Worten, der Öffnungsquerschnitt des vertikal ausgerichteten Absaugschlitzes 15a, 15b vergrößert sich linear mit zunehmendem Abstand vom Kabinenboden 12.

Darüber hinaus ist ein horizontal ausgerichteter Teilbereich 153a, 153b am Absaugschlitz 15a, 15b vorgesehen. Dieser kann gemäß den dargestellten Ausführungsformen beispielsweise einen konstanten Öffnungsquerschnitt aufweisen, welcher dem größten Öffnungsquerschnitt des zweiten Teilbereichs 152a, 152b entspricht. Alternativ ist es selbstverständlich auch möglich, dass der erste Teilbereich 151a des Absaugschlitzes 15a einen größeren Öffnungsquerschnitt aufweist, als der zweite Teilbereich 152a, 152b. Auch ist es denkbar, dass der vertikal ausgerichtete Absaugschlitz 15a, 15b, 15c, 15d einen konstanten oder aber willkürlich wechselnden Öffnungsquerschnitt aufweist.

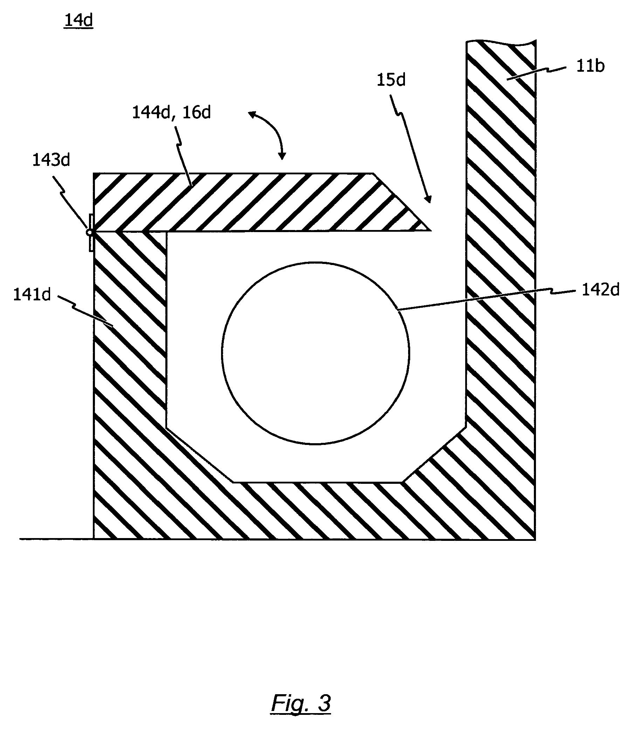

Im Hinblick auf den in Fig. 2 dargestellten schematischen Querschnitt von oben auf einen vertikal verlaufenden Absaugkanal 15d sei ferner angemerkt, dass der vertikal ausgerichtete Absaugschlitz 15a, 15b, 15c, 15d vorzugsweise einen im Wesentlichen düsenförmigen Querschnitt aufweist. Dies kann gemäß der Darstellung in Fig. 3 dadurch erreicht werden, dass die dem Werkstückdurchgang 17a, 17b abgewandte Seite 16a, 16b, 16c, 16d des mindestens einen vertikal verlaufenden Absaugkanals 14a, 14b, 14c, 14d einen angewinkelten Endbereich aufweist, welcher zusammen mit der Seitenwand 11a, 11b den Absaugschlitz 15a, 15b, 15c, 15d düsenförmig ausbildet. Insbesondere ist die Düse dabei in Richtung des Innenraums des vertikal verlaufenden Absaugkanals 14a, 14b, 14c, 14d verjüngend ausgebildet, um einen Geschwindigkeitszuwachs des Absaugluftstromes zu erreichen.

Wie bereits angedeutet, ist der vertikal ausgerichtete Absaugschlitz 15d des mindestens einen vertikal verlaufenden Absaugkanals 14d an einer der Seitenwände 11a, 11b der Beschichtungskammer angeordnet. Dadurch kann die jeweilige Seitenwand 11a, 11b dazu verwendet werden, einen Teil des vertikal ausgerichteten Absaugschlitzes 15d auszubilden, wie dies aus der Abbildung in Fig. 3 ersichtlich ist.

Der mindestens eine vertikal verlaufende Absaugkanal 14d weist einen im Wesentlichen rechteckigen Querschnitt auf, wobei eine erste Seitenwand 141d über ein Scharnier 143d mit einer zweiten Seitenwand 144d des Absaugkanals 14d derart verbunden ist, dass eine Serviceklappe entsteht. In dem in Fig. 3 gezeigten Ausführungsbeispiel ist insbesondere die dem nächstliegenden Werkstückdurchgang 17a, 17b abgewandte Seite 16d als zweite Seitenwand 144d ausgebildet. Durch die Verbindung der ersten Seitenwand 141d mit der zweiten Seitenwand 144d über ein Scharnier 143d wird erreicht, dass die zweite Seitenwand (vom Werkstückdurchgang 17b abgewandte Seitenwand 16d) in Richtung des in Fig. 3 gestellten Doppelpfeils verschwenkt werden kann. Durch das Verschwenken der zweiten Seitenwand 144d wird eine Reinigung des Innenraums des vertikal verlaufenden Absaugkanals 14a, 14b, 14c, 14d erheblich vereinfacht.

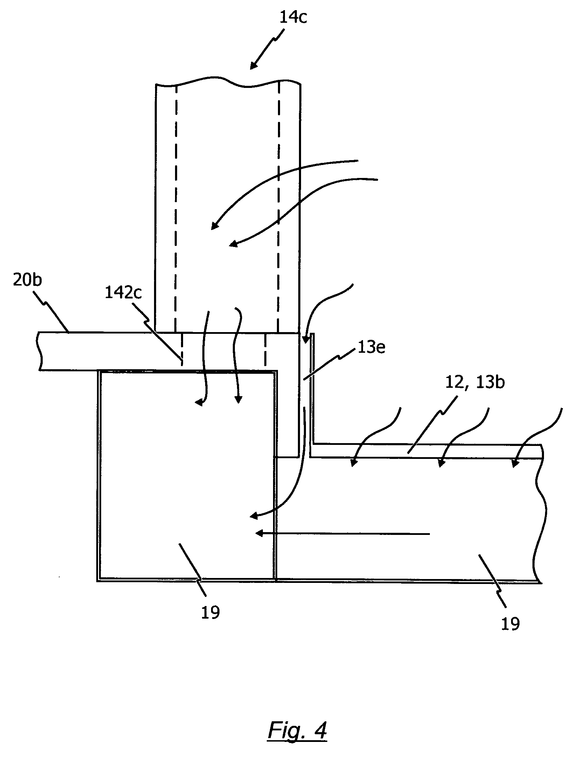

Die erfindungsgemäße Beschichtungskabine 1 weist darüber hinaus einen Absaugbereich 19 (Fig. 4) auf, welcher unterhalb des Kabinenbodens 12 angeordnet ist. Bei der in den Figuren dargestellten Ausführungsform sind die vertikal verlaufenden Absaugkanäle 14a, 14b, 14c, 14d über bodenseitige Durchgangsöffnungen 142a, 142b, 142c, 142d mit dem Absaugbereich 19 verbunden. Zugleich steht der Innenraum der Beschichtungskammer 10 über die vertikal verlaufenden Absaugschlitze 13a, 13b, 13c, 13d, 13e mit dem Absaugbereich 19 in Verbindung.

Zurückkommend auf die Darstellung gemäß Fig. 1 bleibt zu erwähnen, dass der zuvor genannte Absaugbereich 19 ferner mit mindestens einer Absaugvorrichtung 30a, 30b verbunden ist, wobei die Absaugvorrichtung 30a, 30b ausgebildet ist, das von den vertikal und den horizontal ausgerichteten Absaugschlitzen 13a, 13b, 13c, 13d, 13e, 15a, 15b, 15c, 15d abgesaugte, überschüssige Beschichtungspulver abzuführen. Zu diesem Zweck weist die Absaugvorrichtung vorzugsweise eine bodenseitige Durchgangsöffnung 31a auf, mit welcher das abgesaugte Überschusspulver vom Absaugbereich 19 zu einem Zyklon befördert wird.

Wie zu erkennen ist, ist es insbesondere vorgesehen, dass die Beschichtungskabine 1 mit zwei Absaugvorrichtungen 30a, 30b verbunden ist, wobei jeweils zwei der vier vertikal verlaufenden Absaugkanäle 14a, 14b mit jeweils einer der beiden Absaugvorrichtungen 30a, 30b verbunden oder verbindbar sind. Dabei ist es besonders vorteilhaft, wenn die bereits erwähnten mindestens drei horizontal verlaufenden Absaugschlitze 13a, 13b, 13c, welche sich in Transportrichtung der Werkstücke W entlang des Kabinenbodens 12 zwischen den Werkstückdurchgängen 17a und 17b erstrecken, in der Mitte der Beschichtungskammer 10 derart unterteilt sind, dass je ein vorderer Teilbereich entsteht, der mit einer ersten Absaugvorrichtung 13b verbunden oder verbindbar ist, sowie je ein hinterer Teilbereich entsteht, welcher mit einer zweiten Absaugvorrichtung 30a verbunden oder verbindbar ist. Dazu kann es sich bei den mindestens drei horizontal verlaufenden Absaugschlitzen 13a, 13b, 13c beispielsweise um zwei oder mehrere getrennte Schlitze handeln, oder um einen durchgehenden Schlitz, welcher durch eine Trennplatte in der Mitte der Beschichtungskammer 10 (entlang der Mittenachse M) unterteilt ist. Auf diese Weise wird gewährleistet, dass die Saugleistung der ersten und zweiten Absaugvorrichtung der ersten und zweiten Absaugvorrichtung besonders gleichmäßig auf die Absaugschlitze 13a, 13b, 13c, 13d, 13e, 15a, 15b, 15c, 15d verteilt wird.

In diesem Zusammenhang sei ferner erwähnt, dass es insbesondere bevorzugt ist, den vertikal verlaufenden Absaugkanal derart auszubilden, so dass ein Saugluftstrom von 3000 bis 7000 m³/h erzeugt wird. Dagegen sind die mindestens drei horizontal verlaufenden Absaugschlitze 13a, 13b, 13c insbesondere dazu ausgebildet, einen Saugluftstrom von 5000 bis 7500 m³/h zu erzeugen.

Schließlich sei mit Bezug auf die in der Fig. 5 dargestellten Abbildung die Wirkungsweise der vertikal ausgerichteten Absaugkanäle 15a, 15b, 15c, 15d näher erläutert. Durch die spezielle Anordnung und Ausbildung des vertikal ausgerichteten Absaugschlitzes 15a, 15b, 15c, 15d der vertikal ausgerichteten Absaugkanäle 14a, 14b, 14c, 14d entsteht ein besonders vorteilhaft gekrümmter Absaugluftstrom, welcher insbesondere auch den kompletten Werkstückdurchgangsbereich 17a, 17b sowie die Handbeschichtungsbereiche 20a, 20b mit abdeckt. Darüber hinaus wird durch die Anordnung der Absaugschlitze 15a, 15b, 15c, 15d gewährleistet, dass sich nur ein minimaler Rest von überschüssigem Pulver an den Seitenwänden 11a, 11b absetzten kann.

Die Erfindung ist nicht auf das in den Figuren dargestellte Ausführungsbeispiel beschränkt. Vielmehr ergibt sich die Erfindung aus einer Zusammenschau aller in den Figuren gezeigten Merkmale der erfindungsgemäßen Beschichtungskabine.

Insbesondere sei angemerkt, dass die mit Bezug auf die Figuren 2 und 3 beschriebenen Ausführungen des vertikal ausgerichteten Absaugschlitzes bzw. des vertikal verlaufenden Absaugkanals selbstverständlich vorzugsweise für alle dargestellten Absaugkanäle bzw. Absaugschlitze gelten.

### Bezugszeichenliste

- 1: Beschichtungskabine
- 10: Beschichtungskammer
- 11a, 11b: Seitenwand
- 12: Kabinenboden
- 13a, 13b, 13c, 13d, 13e: horizontal ausgerichtete Absaugschlitze
- 14a, 14b, 14c, 14d: vertikal verlaufender Absaugkanal
- 15a, 15b, 15c, 15d: vertikal ausgerichteter Absaugschlitz
- 16a, 16b, 16c, 16d: abgewandte Seite
- 17a, 17b: Werkstückdurchgang
- 18: Deckenbereich
- 19: Absaugbereich
- 20a, 20b: Handbeschichtungsbereich
- 30a, 30b: Absaugvorrichtung
- 31a, 31b: Durchgangsöffnung
- 141d: erste Seitenwand
- 142d: Durchgangsöffnung
- 143d: Scharnier
- 144d: zweite Seitenwand
- 151a, 151b: erster Teilbereich
- 152a, 152b: zweiter Teilbereich
- 153a, 153b: horizontaler Teilbereich
- A: Arbeiter
- M: Mittenachse
- W: Werkstück

## Patentansprüche

1. Beschichtungskabine (1) zum Beschichten von Werkstücken (W) insbesondere mit Beschichtungspulver, wobei die Beschichtungskabine (1) folgendes aufweist:
- eine Beschichtungskammer (10) mit einem Kabinenboden (12) sowie zwei gegenüberliegenden Seitenwänden (11a, 11b);
- zwei an einander gegenüberliegenden Endbereichen der Beschichtungskammer (10) angeordnete Werkstückdurchgänge (17a, 17b);
- eine Fördervorrichtung zum Transport der zu beschichtenden Werkstücke (W) durch die Beschichtungskammer (10);
- mindestens einen am Kabinenboden (12) angeordneten, horizontal ausgerichteten Absaugschlitz (13a, 13b, 13c, 13d, 13e) zum Absaugen von überschüssigem Beschichtungspulver; und
- mindestens ein vertikal verlaufender Absaugkanal (14a, 14b, 14c, 14d) mit einem vertikal ausgerichteten Absaugschlitz (15a, 15b, 15c, 15d) zum Absaugen von überschüssigem Beschichtungspulver,
**dadurch gekennzeichnet, dass**
der mindestens eine vertikal verlaufende Absaugkanal (14a, 14b, 14c, 14d) innerhalb der Beschichtungskammer (10) angeordnet ist, und zwar in einem Eckbereich der Beschichtungskammer (10), welcher an eine der beiden gegenüberliegenden Seitenwände (11a, 11b) sowie an einen der beiden Werkstückdurchgänge (17a, 17b) angrenzt.

2. Beschichtungskabine (1) nach Anspruch 1,
wobei der vertikal ausgerichtete Absaugschlitz (15a, 15b, 15c, 15d) auf einer dem nächstliegenden Werkstückdurchgang abgewandten Seite (16a, 16b, 16c, 16d) des mindestens einen vertikal verlaufenden Absaugkanals (14a, 14b, 14c, 14d) angeordnet ist.

3. Beschichtungskabine (1) nach Anspruch 1 oder 2,
wobei die Beschichtungskabine (1) mindestens einen Handbeschichtungsbereich (20a, 20b) aufweist, welcher vor und/oder hinter der Beschichtungskammer (10), neben dem jeweiligen Werkstückdurchgang (17a, 17b), angeordnet ist.

4. Beschichtungskabine (1) nach einem der vorhergehenden Ansprüche, wobei sich der vertikal ausgerichtete Absaugschlitz (15a, 15b, 15c, 15d) vom Kabinenboden (12) bis zu einem Deckenbereich (18) der Beschichtungskammer (10) erstreckt.

5. Beschichtungskabine (1) nach einem der vorhergehenden Ansprüche, wobei der vertikal ausgerichtete Absaugschlitz (15a, 15b, 15c, 15d) mehrere Teilbereiche (151a, 151b, 152a, 152b, 153a, 153b) vorzugsweise mit unterschiedlich großem Öffnungsquerschnitt aufweist.

6. Beschichtungskabine (1) nach Anspruch 5,
wobei der vertikal ausgerichtete Absaugschlitz (15a, 15b, 15c, 15d) einen ersten Teilbereich (151a, 151b) aufweist, welcher am Kabinenboden (12) angeordnet ist und einen kleineren Öffnungsquerschnitt aufweist als ein zweiter Teilbereich (152a, 152b), welcher an einem Deckenbereich (18) der Beschichtungskammer (10) angeordnet ist.

7. Beschichtungskabine (1) nach einem der vorhergehenden Ansprüche, wobei der vertikal ausgerichtete Absaugschlitz (15a, 15b, 15c, 15d) einen im Wesentlichen düsenförmigen Querschnitt aufweist.

8. Beschichtungskabine (1) nach einem der vorhergehenden Ansprüche, wobei der vertikal ausgerichtete Absaugschlitz (15a, 15b, 15c, 15d) des mindestens einen vertikal verlaufenden Absaugkanals (14a, 14b, 14c, 14d) an einer der Seitenwände (11a, 11b) der Beschichtungskammer (10) angeordnet ist.

9. Beschichtungskabine (1) nach einem der vorhergehenden Ansprüche, wobei der mindestens eine vertikal verlaufende Absaugkanal (14a, 14b, 14c, 14d) einen im Wesentlichen rechteckigen Querschnitt aufweist, wobei eine erste Seitenwand (141d) des vertikal verlaufenden Absaugkanals (14a, 14b, 14c, 14d) derart über ein Scharnier (143d) mit einer zweiten Seitenwand (144d) des Absaugkanals (14a, 14b, 14c, 14d) verbunden ist, dass eine Serviceklappe entsteht.

10. Beschichtungskabine (1) nach einem der vorhergehenden Ansprüche, wobei die Beschichtungskabine (1) einen Absaugbereich (19) unterhalb des Kabinenbodens (12) aufweist, welcher mit mindestens einer Absaugvorrichtung (30a, 30b) verbunden ist, wobei die Absaugvorrichtung (30a, 30b) ausgebildet ist, das von den vertikal und den horizontal ausgerichteten Absaugschlitzen (13a, 13b, 13c, 13d, 13e, 15a, 15b, 15c, 15d) abgesaugte, überschüssige Beschichtungspulver abzuführen.

11. Beschichtungskabine (1) nach einem der vorhergehenden Ansprüche, wobei der mindestens eine vertikal verlaufende Absaugkanal (14a, 14b, 14c, 14d) für einen Saugluftstrom von 3000 bis 7000 m³/h ausgebildet ist.

12. Beschichtungskabine (1) nach einem der vorhergehenden Ansprüche, wobei die Beschichtungskabine (1) vier vertikal verlaufende Absaugkanäle 14a, 14b, 14c, 14d) mit jeweils mindestens einem vertikal ausgerichteten Absaugschlitz (15a, 15b, 15c, 15d) aufweist zum Absaugen von überschüssigem Beschichtungspulver.

13. Beschichtungskabine (1) nach Anspruch 12,
wobei die Beschichtungskabine (1) zwei Absaugvorrichtungen (30a, 30b) aufweist, wobei jeweils zwei der vier vertikal verlaufenden Absaugkanäle (14a, 14b, 14c, 14d) mit jeweils einer der beiden Absaugvorrichtungen (30a, 30b) verbunden oder verbindbar sind.

14. Beschichtungskabine (1) nach Anspruch 13,
wobei die Beschichtungskabine (1) mindestens drei horizontal verlaufende Absaugschlitze (13a, 13b, 13c) aufweist, welche sich in Transportrichtung der Werkstücke entlang des Kabinenbodens (12) zwischen den Werkstückdurchgängen (17a, 17b) erstrecken und in der Mitte der Beschichtungskammer (10) derart unterteilt sind, dass jeweils ein vorderer Teilbereich gebildet wird, der mit einer ersten Absaugvorrichtung (30b) verbunden oder verbindbar ist, sowie jeweils ein hinterer Teilbereich gebildet wird, welcher mit einer zweiten Absaugvorrichtung (30a) verbunden oder verbindbar ist,
wobei die drei horizontal verlaufenden Absaugschlitze jeweils für einen Saugluftstrom von 5000 bis 7500 m³/h ausgebildet sind.

15. Beschichtungskabine (1) nach einem der vorhergehenden Ansprüche, wobei die Beschichtungskabine (1) mindestens eine Luftblasvorrichtung aufweist, welche entlang des Kabinenbodens (12) angeordnet und ausgebildet ist, überschüssiges Pulver in Richtung des mindestens einen horizontal verlaufenden Absaugschlitzes (13a, 13b, 13c, 13d, 13e) zu blasen.

## Claims

1. A coating booth (1) for coating workpieces (W), particularly with coating powder, wherein the coating booth (1) comprises the following:
- a coating chamber (10) having a booth floor (12) as well as two opposing side walls (11a, 11b);
- two workpiece passageways (17a, 17b) arranged on opposite end regions of the coating chamber (10);
- a conveying device for transporting the workpieces (W) to be coated through the coating chamber (10);
- at least one horizontally oriented suction slot (13a, 13b, 13c, 13d, 13e) arranged on the booth floor (12) for suctioning off excess coating powder, and
- at least one vertically extending suction channel (14a, 14b, 14c, 14d) having a vertically oriented suction slot (15a, 15b, 15c, 15d) for suctioning off excess coating powder,
**characterized in that**
the at least one vertically extending suction channel (14a, 14b, 14c, 14d) is arranged within the coating chamber (10), and namely in a corner region of the coating chamber (10) adjoining one of the two opposite side walls (11a, 11b) as well as one of the two workpiece passageways (17a, 17b).

2. The coating booth (1) according to claim 1,
wherein the vertically oriented suction slot (15a, 15b, 15c, 15d) is disposed at one of the far sides (16a, 16b, 16c, 16d) of the at least one vertically extending suction channel (14a, 14b, 14c, 14d) from the nearest workpiece passageway.

3. The coating booth (1) according to claim 1 or 2,
wherein the coating booth (1) comprises at least one manual coating region (20a, 20b) arranged in front of and/or behind the coating chamber (10) adjacent to the respective workpiece passageway (17a, 17b).

4. The coating booth (1) according to any one of the preceding claims,
wherein the vertically oriented suction slot (15a, 15b, 15c, 15d) extends from the booth floor (12) to a ceiling region (18) of the coating chamber (10).

5. The coating booth (1) according to any one of the preceding claims,
wherein the vertically oriented suction slot (15a, 15b, 15c, 15d) comprises a plurality of subregions (151a, 151b, 152a, 152b, 153a, 153b) of preferably differently sized opening cross sections.

6. The coating booth (1) according to claim 5,
wherein the vertically oriented suction slot (15a, 15b, 15c, 15d) comprises a first subregion (151a, 151b) arranged on the booth floor (12) and having a smaller opening cross section than a second subregion (152a, 152b) which is arranged at a ceiling region (18) of the coating chamber (10).

7. The coating booth (1) according to any one of the preceding claims,
wherein the vertically oriented suction slot (15a, 15b, 15c, 15d) exhibits a substantially nozzle-like cross section.

8. The coating booth (1) according to any one of the preceding claims,
wherein the vertically oriented suction slot (15a, 15b, 15c, 15d) of the at least one vertically extending suction channel (14a, 14b, 14c, 14d) is arranged on one of the side walls (11a, 11b) of the coating chamber (10).

9. The coating booth (1) according to any one of the preceding claims,
wherein the at least one vertically extending suction channel (14a, 14b, 14c, 14d) exhibits a substantially rectangular cross section, wherein a first side wall (141d) of the vertically extending suction channel (14a, 14b, 14c, 14d) is connected to a second side wall (144d) of the suction channel (14a, 14b, 14c, 14d) by means of a hinge (143d) so as to form a service flap.

10. The coating booth (1) according to any one of the preceding claims,
wherein the coating booth (1) comprises a suction region (19) underneath the booth floor (12) which is connected to at least one suction device (30a, 30b), wherein the suction device (30a, 30b) is designed to evacuate excess coating powder suctioned off from the vertically and horizontally oriented suction slots (13a, 13b, 13c, 13d, 13e, 15a, 15b, 15c, 15d).

11. The coating booth (1) according to any one of the preceding claims,
wherein the at least one vertically extending suction channel (14a, 14b, 14c, 14d) is designed for a suction airflow of from 3000 to 7000 m³/h.

12. The coating booth (1) according to any one of the preceding claims,
wherein the coating booth (1) comprises four vertically extending suction channels (14a, 14b, 14c, 14d), each respectively having at least one vertically oriented suction slot (15a, 15b, 15c, 15d) for suctioning off excess coating powder.

13. The coating booth (1) according to claim 12,
wherein the coating booth (1) comprises two suction devices (30a, 30b), wherein two of the four vertically extending suction channels (14a, 14b, 14c, 14d) are in each case connected or connectable to a respective one of the two suction devices (30a, 30b).

14. The coating booth (1) according to claim 13,
wherein the coating booth (1) comprises at least three horizontally extending suction slots (13a, 13b, 13c) which extend along the booth floor (12) between the workpiece passageways (17a, 17b) in the direction of the workpiece transport and are divided in the center of the coating booth (10) so as to in each case form a respective front subsection which is or can be connected to a first suction device (30b) as well as a respective rear subsection which is or can be connected to a second suction device (30a), wherein the three horizontally extending suction slots are each designed for a suction airflow of from 5000 to 7500 m³/h.

15. The coating booth (1) according to any one of the preceding claims,
wherein the coating booth (1) comprises at least one air blowing mechanism arranged along the booth floor (12) and designed to blow excess powder toward the at least one horizontally extending suction slot (13a, 13b, 13c, 13d, 13e).

## Revendications

1. Cabine de revêtement (1) pour le revêtement de pièces à oeuvrer (W) en particulier par une poudre de revêtement, la cabine de revêtement (1) comprenant :
- une chambre de revêtement (10) pourvue d'un fond de cabine (12) ainsi que de deux parois latérales opposées (11a, 11b) ;
- deux passages de pièces (17a, 17b) agencés sur des zones d'extrémité opposées de la chambre de revêtement (10) ;
- un dispositif de transport pour transporter les pièces (W) à revêtir à travers la chambre de revêtement (10) ;
- au moins une fente d'aspiration (13a, 13b, 13c, 13d, 13e) ménagée au fond de cabine (12), orientée horizontalement et destinée à aspirer la poudre de revêtement excédentaire ; et
- au moins un canal d'aspiration vertical (14a, 14b, 14c, 14d) pourvu d'une fente d'aspiration (15a, 15b, 15c, 15d) orientée verticalement et destinée à aspirer la poudre de revêtement excédentaire ;
**caractérisée en ce que**
ledit au moins un canal d'aspiration vertical (14a, 14b, 14c, 14d) est agencé à l'intérieur de la chambre de revêtement (10), à savoir dans une zone de coin de la chambre de revêtement (10), qui est adjacente à l'une des deux parois latérales opposées (11a, 11b) ainsi qu'à l'un des passages de pièces (17a, 17b).

2. Cabine de revêtement (1) selon la revendication 1,
dans laquelle la fente d'aspiration (15a, 15b, 15c, 15d) orientée verticalement est ménagée sur un côté (16a, 16b, 16c, 16d), détourné du passage de pièces le plus proche, dudit au moins un canal d'aspiration vertical (14a, 14b, 14c, 14d).

3. Cabine de revêtement (1) selon la revendication 1 ou 2,
dans laquelle la cabine de revêtement (1) comprend au moins une zone de revêtement manuel (20a, 20b) qui est agencé en avant et/ou en arrière de la chambre de revêtement (10) à côté du passage de pièces (17a, 178b) respectif.

4. Cabine de revêtement (1) selon l'une des revendications précédentes,
dans laquelle la fente d'aspiration (15a, 15b, 15c, 15d) orientée verticalement s'étend depuis le fond de cabine (12) jusqu'à une zone de plafond (18) de la chambre de revêtement (10).

5. Cabine de revêtement (1) selon l'une des revendications précédentes,
dans laquelle la fente d'aspiration (15a, 15b, 15c, 15d) orientée verticalement présente plusieurs zones partielles (151a, 151b, 152a, 152b, 153a, 153b), présentant de préférence des sections transversales d'ouverture de différentes tailles.

6. Cabine de revêtement (1) selon la revendication 5,
dans laquelle la fente d'aspiration (15a, 15b, 15c, 15d) orientée verticalement présente une première zone partielle (151a, 151b) qui est agencée au fond de cabine (12) et qui présente une section transversale d'ouverture plus petite qu'une seconde zone partielle (152a, 152b) qui est agencée dans une zone de plafond (18) de la chambre de revêtement (10).

7. Cabine de revêtement (1) selon l'une des revendications précédentes,
dans laquelle la fente d'aspiration (15a, 15b, 15c, 15d) orientée verticalement présente une section transversale sensiblement en forme de buse.

8. Cabine de revêtement (1) selon l'une des revendications précédentes,
dans laquelle la fente d'aspiration (15a, 15b, 15c, 15d) orientée verticalement dudit au moins un canal d'aspiration vertical (14a, 14b, 14c, 14d) est disposée sur l'une des parois latérales (11a, 11b) de la chambre de revêtement (10).

9. Cabine de revêtement (1) selon l'une des revendications précédentes,
dans laquelle ledit au moins un canal d'aspiration vertical (14a, 14b, 14c, 14d) présente une section transversale sensiblement rectangulaire, une première paroi latérale (141d) du canal d'aspiration vertical (14a, 14b, 14c, 14d) étant relié à une seconde paroi latérale (144d) du canal d'aspiration (14a, 14b, 14c, 14d) par une charnière (143d), de telle sorte qu'il se forme une trappe de maintenance.

10. Cabine de revêtement (1) selon l'une des revendications précédentes,
dans laquelle la cabine de revêtement (1) présente une zone d'aspiration (19) au-dessous du fond de cabine (12), qui est relié à au moins un dispositif d'aspiration (30a, 30b), le dispositif d'aspiration (30a, 30b) étant réalisé pour évacuer la poudre de revêtement excédentaire aspirée par les fentes d'aspiration orientées verticalement et horizontalement (13a, 13b, 13c, 13d, 13e, 15a, 15b, 15c, 15d).

11. Cabine de revêtement (1) selon l'une des revendications précédentes,
dans laquelle ledit au moins un canal d'aspiration vertical (14a, 14b, 14c, 14d) est réalisé pour un flux d'air aspiré de 3000 à 7000 m³/h.

12. Cabine de revêtement (1) selon l'une des revendications précédentes,
dans laquelle la cabine de revêtement (1) comprend quatre canaux d'aspiration verticaux (14a, 14b, 14c, 14d) présentant chacun au moins une fente d'aspiration (15a, 15b, 15c, 15d) orientée verticalement pour aspirer la poudre de revêtement excédentaire.

13. Cabine de revêtement (1) selon la revendication 12,
dans laquelle la cabine de revêtement (1) comprend deux dispositifs d'aspiration (30a, 30b), deux parmi les quatre canaux d'aspiration verticaux (14a, 14b, 14c, 14d) étant reliés ou susceptibles d'être reliés chacun à l'un des deux dispositifs d'aspiration (30a, 30b).

14. Cabine de revêtement (1) selon la revendication 13,
dans laquelle la cabine de revêtement (1) comprend au moins trois fentes d'aspiration (13a, 13b, 13c) horizontales qui s'étendent en direction de transport des pièces à oeuvrer le long du fond de cabine (12) entre les passages de pièces (17a, 17b) et qui sont subdivisées au milieu de la chambre de revêtement (10) de telle sorte qu'il se forme une zone partielle avant respective qui est reliée ou susceptible d'être reliée à un premier dispositif d'aspiration (30b) et qu'il se forme une zone partielle arrière respective qui est reliée ou susceptible d'être reliée à un second dispositif d'aspiration (30a),
les trois fentes d'aspiration horizontales étant réalisées chacune pour un flux d'air aspiré de 5000 à 7500 m³/h.

15. Cabine de revêtement (1) selon l'une des revendications précédentes,
dans laquelle la cabine de revêtement (1) présente au moins un dispositif de soufflage d'air qui est agencé le long du fond de cabine (12) et qui est réalisé pour souffler la poudre excédentaire en direction de ladite au moins une fente d'aspiration horizontale (13a, 13b, 13c, 13d, 13e).
